# EUROPEAN PATENT SPECIFICATION

(11) **EP 1 281 257 B1**
(45) Date of publication and mention of the grant of the patent: **26.11.2003**
(21) Application number: 01933930.8
(22) Date of filing: 04.05.2001
(51) Int. Cl.: H04L 12/24, H04L 12/26

(54) **A METHOD OF AUTOMATICALLY CONTROLLING PERFORMANCE MEASUREMENTS IN A NETWORK, A PERFORMANCE MANAGEMENT CONTROLLER, AND A PERFORMANCE MANAGEMENT SYSTEM**
VERFAHREN ZUM AUTOMATISCHEN STEUERN VON LEISTUNGSMESSUNGEN IN EINEM NETZWERK, STEUERVORRICHTUNG ZUR LEISTUNGSVERWALTUNG UND SYSTEM ZUR LEISTUNGSVERWALTUNG
PROCEDE PERMETTANT DE CONTROLER AUTOMATIQUEMENT DES MESURES DE RENDEMENT DANS UN RESEAU, ET SYSTEME DE GESTION DU RENDEMENT

(30) Priority: 12.05.2000 GB 0011536
(43) Date of publication of application: 05.02.2003
(73) Proprietor: TELEFONAKTIEBOLAGET LM ERICSSON (publ), 126 25 Stockholm (SE)
(72) Inventor: MEE, Jerome, Co. Roscommon (IE); BRADY, Bernard, Co. Carlow (IE); MOYNIHAN, Marie, Bishopstown Cork (IE); LAMBERT, Robert, Ballybrack Dublin (IE)
(74) Representative: O'Connell, David Christopher
(86) International application number: EP0105050
(87) International publication number: WO01086873

(56) References cited:
- WO-A-98/26541
- US-A- 5 655 071
- US-A- 5 793 753
- US-A- 5 963 943
- US-A- 5 964 837

## Description

### Field of the invention

The invention relates to a network management system and method, and in particular, to a network management system and method in which performance measurements are controlled according to changes in network configuration, for example, due to faults in the network or network updates.

### Background to the invention

A network such as a telecommunications network typically contains a number of performance management tools for monitoring the performance of the network. The user of the performance management tools has control over the selection, activation and deactivation of performance measurement reports in the network.

Default performance measurements are selected from the performance management tool in order to monitor the network performance at all times.

A network may also contain fault management tools for detecting faults in the network and/or configuration management tools for reconfiguring the network.

Changes in the configuration of the network may take place for a number of reasons, such as scheduled configuration changes to update the network, or unplanned configuration changes to deal with faults occurring in the network. For example, the configuration of a network will change if a piece of equipment fails, and is taken out of service (either temporarily or permanently), or if a new piece of equipment is added to the network.

Changes in the configuration of a network can result in the default performance measurements being redundant or meaningless.

US-5,655,071 discloses a system which uses performance measurements to detect the emergence of faults in a network. However, although such a system is useful for detecting potential faults, it has no means of changing the performance measurements in response to the faults which are detected. This can result in unnecessary performance measurements being taken.

US-A-5 963 943 discloses a system where topology information of a network is received from local support elements. The information gathered may then be processed by network operators as performance data about the network.

US-A-5 964 837 discloses a network management system where topology information about the network may be collected by a management station in a polling mode or in an event-driven mode. The information generated by the management station can be made available to other management functions such as performance.

The aim of the present invention is to provide a network management system and method in which a group of performance measurements are automatically activated and/or deactivated in accordance with changes in the configuration of a network.

### Summary of the invention

According to a first aspect of the present invention, there is provided a method of automatically controlling which performance measurements are carried out in a network in which a plurality of different performance measurements are performed, the method comprising the steps of:
receiving information relating to changes in the configuration of the network; characterised by the steps of;
determining whether the changes in the configuration of the network have an impact on any performance measurements being made in the network; and
if so,
automatically changing which performance measurements are carried out by:
determining which logical or physical component of the network is affected by the change in network configuration;
determining which group of performance measurements relates to the network component concerned;
determining a time schedule for the group of performance measurements; and,
activating or deactivating the group of performance measurements accordingly.

According to another aspect of the present invention, there is provided a performance management controller for automatically controlling which performance measurements are carried out in a network in which a plurality of performance measurements performed, the performance management controller comprising:
means for receiving information relating to changes in the configuration of the network;
characterised by
means for determining whether the changes in the configuration of the network have an impact on any performance measurements being made in the network; and means for automatically changing which performance measurements are carried out if the changes in the configuration of the network have an impact on the performance measurements, said means for changing the performance measurements comprising:
means for determining which logical or physical component of the network is affected by the change in network configuration,
means for determining which group of performance measurements relates to the network component concerned;
means for determining a time schedule for the group of performance measurements; and,
means for activating or deactivating the group of performance measurements accordingly.

According to yet another aspect of the present invention, there is provided a network management system as defined in the appended claims.

### Brief description of the drawings

For a better understanding of the present invention, and to show more clearly how it may be carried into effect, reference will now be made, by way of example, to the accompanying drawings, in which:-
Figure 1 shows a network management system according to the present invention;
Figure 2 shows the operation of the performance measurement controller of Figure 1.

### Detailed description of a preferred embodiment of the invention

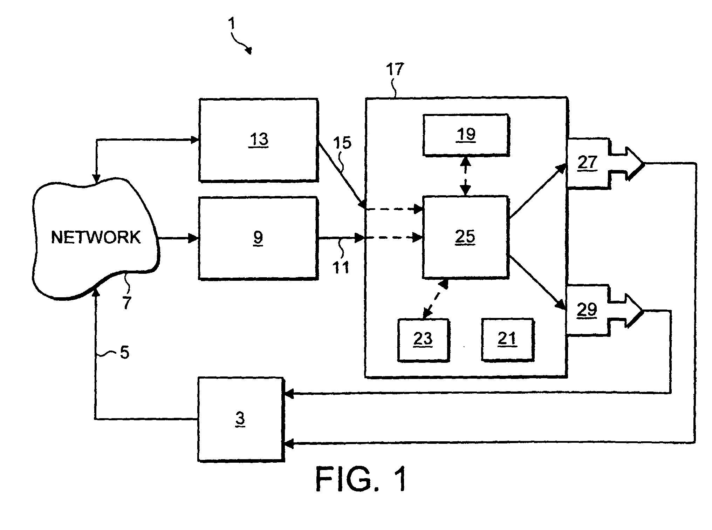

Referring to Figure 1, a network management system 1 comprises a performance management tool 3 for activating and deactivating 5 performance measurements in a network 7.

The network management system 1 also comprises a fault management tool 9 for detecting faults which occur in the network 7, and producing corresponding fault reports 11. The fault reports 11 can relate to faults which have already occurred in the network, or faults which are predicted to occur in the future.

A configuration management tool 13 controls the configuration of the network, and produces network configuration reports 15 which define the configuration of the network 7, or report on changes that have taken place in the network.

The performance management controller 17 according to the present invention receives the fault reports 11 and network configuration reports 15 from the fault and configuration management tools, respectively. Using this information, the performance management controller 17 investigates if changes in the configuration of the network, (for example caused by removal, temporary removal, re-location, or the addition of network components), have an impact on the performance measurements being carried out. In other words, the performance management controller 17 determines whether any performance measurements need to be activated or deactivated as a result of the changes in the configuration of the network.

For this purpose, the performance management controller 17 comprises a list of performance measurement groups 19, a list of physical/logical components of the network 21, a list of predefined time schedules 23, and a control unit 25.

Each of the performance measurement groups is related to one or more of the logical or physical components in the network, which are listed in the list of logical or physical components 21. Thus, each performance measurement group relates to performance measurements which should be made on one or more network components.

This predefined relationship between performance measurement groups and the logical or physical components of the network provides the basis for determining which measurements need to be activated or deactivated in response to a change in the configuration of the network.

For example, if a new component is installed in the network, the performance management controller 17 will trigger a standard, or predefined, set of measurements.

The performance management groups report on the same logical and physical components as the fault management tool 9 and configuration management tool 13. In this way, the performance management controller 17, the fault management tool 9 and the configuration management tool 13 are able to understand one another, and report on the same measurable components.

Each of the predefined time schedules in the list of predefined time schedules 23 contains information relating to a specific performance measurement group. This information corresponds, for example, to the point in time at which the performance measurement group should be activated, and the length of time the performance measurement group should remain activated.

The performance management controller 17 has activating means 27 for activating a group of performance measurements, for example by instructing the performance management tool 3. The performance management controller 17 also comprises deactivating means 29 for deactivating a group of performance measurements, again by instructing the performance management tool 3.

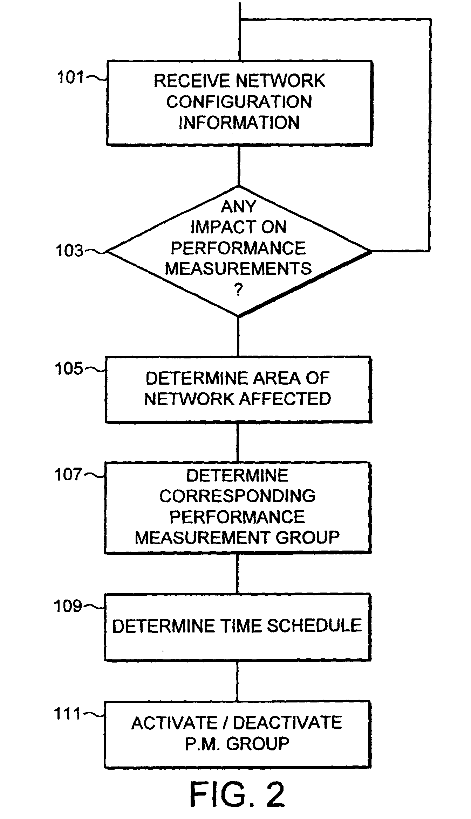

Reference will now be made to Figure 2, which describes the operation of the network management controller 17 of Figure 1.

The control unit 25 of the performance management controller 17 receives network configuration information, step 101, in the form of fault reports 11 and network configuration reports 15. The fault reports 11 and network configuration reports 15 are provided by the fault management tools 9 and configuration management tools 13, respectively. The information from both these sources provide information concerning the configuration of the network.

Using the network configuration information 11, 15, the control unit 25 determines whether changes to the configuration of the network have any impact on the performance measurements which are currently being carried out in the network, i.e. whether any measurements need to be activated or deactivated in response to any changes to the configuration of the network, step 103.

For example, the removal, or temporary removal, of a network component may result in a group of performance measurements being deactivated.

Alternatively, the re-location or addition of a network component may result in a group of performance measurements being activated.

It is noted that the examples given above are not exhaustive, insofar as the removal of a network component could also result in a performance measurement group being activated, and the addition of a network component result in a performance measurement group being deactivated. Furthermore, the removal of a network component could result in some measurements being activated and others being deactivated, (and vice versa if a network component is added or relocated).

The control unit 25, using the list of logical or physical components 21, determines which area of the network is affected by the configuration changes, step 105.

Next, using the list of performance measurement groups 19, the control unit 25 determines which group of performance measurements corresponds to the particular network component which is effected by the change in network configuration, step 107.

A time schedule relating to that group of performance measurements is then determined using the list of predefined time schedules 23, step 109. Thus, it will select what time the relevant performance measurement group should be activated or deactivated, and for what duration, step 109.

Using the information determined above, the control unit 25 then activates or deactivates the relevant performance measurement group accordingly, step 111.

The time schedule for a particular group of performance measurements may include information relating to the predefined time for which the performance measurement group should remain activated or deactivated. If so, after the appropriate time has elapsed, the control unit 25 can deactivate or activate the group of performance measurements, respectively.

If the network configuration changes frequently, for example if a network component has a cyclic fault (i.e. which alternates between being in a "faulty" state or a "normal" state), the corresponding performance measurement group can also be activated or deactivated as the network component moves between the "faulty" and "normal" states.

Furthermore, the performance management controller may use hysteresis to provide a delay between the network configuration changing, and the corresponding performance measurement group being activated or deactivated. Such hysteresis prevents performance measurement groups from being repeatedly activated or deactivated when the network configuration changes frequently as discussed above.

The performance management controller 17 enables performance measurements to be automatically changed according to the configuration of the network at any particular moment in time, thereby permitting the most relevant performance data to be gathered.

The automatic activation and deactivation of the performance measurements in this manner means that wasteful measurements are not carried out.

Thus, if a fault in the network results in a piece of equipment failing, and thereby being removed, then the performance measurements relating to this piece of equipment will be automatically deactivated.

Likewise, if configuration changes are carried out which result in a network component being added to the network, performance measurement will be automatically activated to monitor those components.

In the description above, the activation of a group of performance measurements has been described as beginning all the measurements within that group. Similarly, the deactivation of a group of performance measurements has been described as ceasing all performance measurements within that group.

However, it is noted that the activation of a group of performance measurements can also result in certain performance measurements within the group being started and others being ceased. Likewise, the deactivation of a group of performance measurements can result in certain performance measurements within that group being ceased, and others being started.

Furthermore, any reference made to a network component is taken to include sub-parts within that component, such that any reference made to a network components is taken to include a component and/or a plurality of sub-parts of that component.

Other modifications which are obvious to a person skilled in the art may be made without departing from the scope of the invention, as defined in the appended claims.

## Claims

1. A method of automatically controlling which performance measurements are carried out in a network (7) in which a plurality of different performance measurements are performed, the method comprising the steps of:
receiving information relating to changes in the configuration of the network (7); **characterised by** the steps of;
determining whether the changes in the configuration of the network (7) have an impact on any performance measurements being made in the network; and if so,
automatically changing which performance measurements are carried out by:
determining which logical or physical component of the network is affected by the change in network configuration;
determining which group of performance measurements relates to the network component concerned;
determining a time schedule for the group of performance measurements; and,
activating or deactivating the group of performance measurements accordingly.

2. A method as claimed in claim 1, wherein the change in network configuration is due to a fault in the network.

3. A method as claimed in claim 1 or 2, wherein the change in network configuration is due to a network update.

4. A method as claimed in any one of the preceding claims, wherein the change in network configuration is due to the relocation of a network component.

5. A method as claimed in any one of the preceding claims, wherein the removal of a network component results in a group of performance measurements being deactivated.

6. A method as claimed in any one of the preceding claims, wherein the addition of a network component results in a group of performance measurements being activated.

7. A method as claimed in any one of the preceding claims, wherein the performance measurements are grouped according to one or more logical or physical components in the network.

8. A method as claimed in any one of the preceding claims, wherein each group of performance measurements has a predefined time schedule.

9. A performance management controller (17) for automatically controlling which performance measurements are carried out in a network (7) in which a plurality of performance measurements performed, the performance management controller comprising:
means for receiving information relating to changes in the configuration of the network; **characterised by**
means (25) for determining whether the changes in the configuration of the network (7) have an impact on any performance measurements being made in the network;
and means (25, 3) for automatically changing which performance measurements are carried out if the changes in the configuration of the network have an impact on the performance measurements, said means for changing the performance measurements comprising:
means for determining which logical or physical component of the network is affected by the change in network configuration;
means for determining which group of performance measurements relates to the network component concerned,
means for determining a time schedule for the group of performance measurements; and,
means for activating or deactivating the group of performance measurements accordingly.

10. A performance management controller as claimed in claim 9, wherein the change in network configuration is due to a fault in the network.

11. A performance management controller as claimed in claim 9 or 10, wherein the change in network configuration is due to a network update.

12. A performance management controller as claimed in any one of claims 9 to 11, wherein the change in network configuration is due to the relocation of a network component.

13. A performance management controller as claimed in any one of claims 9 to 12, wherein the means for changing the performance measurements has means for deactivating a group of performance measurements when a network component is removed.

14. A performance management controller as claimed in any one of claims 9 to 13, wherein the means for changing the performance measurements has means for activating a group of performance measurements when a network component is added.

15. A performance management controller as claimed in any one of claims 9 to 14, having means for storing performance measurements which are grouped according to one or more logical or physical components in the network.

16. A performance management controller as claimed in any one of claims 9 to 15, having means for storing a list of predefined time schedules, each time schedule corresponding to a respective performance measurement group.

17. A performance management system comprising a plurality of physical or logical components, a performance measurement tool for carrying out performance measurements, a fault management tool for reporting faults in the network, a configuration management tool for configuring the network and providing configuration reports on changes occurring in the network, the performance management system further comprising a performance management controller as claimed in any one of claims 9 to 16.

## Patentansprüche

1. Verfahren des automatischen Steuerns, welche Leistungsmessungen in einem Netz (7) ausgeführt werden, in dem eine Vielzahl unterschiedlicher Leistungsmessungen durchgeführt werden, wobei das Verfahren die Schritte umfasst:
Empfangen von Änderungen in die Konfiguration des Netzes (7) betreffender Information; **gekennzeichnet durch** die Schritte:
Bestimmen, ob die Änderungen in der Konfiguration des Netzes (7) einen Einfluss auf irgendwelche Leistungsmessungen haben, die in dem Netz ausgeführt werden; und wenn dies der Fall ist,
automatisches Ändern, welche Leistungsmessungen ausgeführt werden, **durch**:
Bestimmen, welche logischen oder physikalischen Komponenten des Netzes von der Änderung in der Netzkonfiguration betroffen sind;
Bestimmen, welche Gruppe von Leistungsmessungen in Bezug steht zu den betroffenen Netzkomponenten;
Bestimmen eines Zeitplans für die Gruppe von Leistungsmessungen; und
entsprechendes Aktivieren oder Deaktivieren der Gruppe von Leistungsmessungen.

2. Verfahren nach Anspruch 1, wobei die Änderung in der Netzkonfiguration bedingt ist durch einen Fehler im Netz.

3. Verfahren nach Anspruch 1 oder 2, wobei die Änderung in der Netzkonfiguration durch eine Netzaktualisierung bedingt ist.

4. Verfahren nach einem der vorhergehenden Ansprüche, wobei die Änderung in der Netzkonfiguration durch die Neuanordnung von Netzkomponenten bedingt ist.

5. Verfahren nach einem der vorhergehenden Ansprüche, wobei das Entfernen einer Netzkomponente in dem Deaktivieren einer Gruppe von Leistungsmessungen resultiert.

6. Verfahren nach einem der vorhergehenden Ansprüche, wobei das Hinzufügen einer Netzkomponente in dem Aktivieren einer Gruppe von Leistungsmessungen resultiert.

7. Verfahren nach einem der vorhergehenden Ansprüche, wobei die Leistungsmessungen in Gruppen zusammengefasst sind in Übereinstimmung mit einer oder mehreren logischen oder physikalischen Komponenten im Netz.

8. Verfahren nach einem der vorhergehenden Ansprüche, wobei jede Gruppe von Leistungsmessungen einen vorbestimmten Zeitplan hat.

9. Leistungs-Management-Controller (17) zum automatischen Steuern, welche Leistungsmessungen in einem Netz (7) ausgeführt werden, in dem eine Vielzahl von Leistungsmessungen durchgeführt werden, wobei der Leistungs-Management-Controller umfasst:
eine Vorrichtung zum Empfangen von Änderungen in die Konfiguration des Netzes betreffender Information;
**gekennzeichnet durch**
eine Vorrichtung (25) zum Bestimmen, ob die Änderungen in der Konfiguration des Netzes (7) einen Einfluss auf irgendwelche Leistungsmessungen haben, die im Netz ausgeführt werden;
und eine Vorrichtung (25, 3) zum automatischen Ändern, welche Leistungsmessungen ausgeführt werden, wenn die Änderungen in der Konfiguration des Netzes einen Einfluss auf die Leistungsmessungen hat, wobei die Vorrichtung zum Ändern der Leistungsmessungen umfasst:
eine Vorrichtung zum Bestimmen, welche logischen und physikalischen Elemente des Netzes von der Änderung in der Netzkonfiguration betroffen sind;
eine Vorrichtung zum Bestimmen, welche Gruppe von Leistungsmessungen sich auf die betroffenen Netzkomponenten bezieht;
eine Vorrichtung zum Bestimmen eines Zeitplans für die Gruppe von Leistungsmessungen; und
eine Vorrichtung, um die Gruppe von Leistungsmessungen entsprechend zu aktivieren oder zu deaktivieren.

10. Leistungs-Management-Controller nach Anspruch 9, wobei die Änderung in der Netzkonfiguration bedingt ist durch einen Fehler im Netz.

11. Leistungs-Management-Controller nach Anspruch 9 oder 10, wobei die Änderung in der Netzkonfiguration durch eine Netzaktualisierung bedingt ist.

12. Leistungs-Management-Controller nach einem der Ansprüche 9 bis 11, wobei die Änderung in der Netzkonfiguration durch die Neuanordnung von Netzkomponenten bedingt ist.

13. Leistungs-Management-Controller nach einem der Ansprüche 9 bis 12, wobei die Vorrichtung zum Ändern der Leistungsmessungen eine Vorrichtung hat zum Deaktivieren einer Gruppe von Leistungsmessungen, wenn eine Netzkomponente entfernt worden ist.

14. Leistungs-Management-Controller nach einem der Ansprüche 9 bis 13, wobei die Vorrichtung zum Ändern der Leistungsmessungen eine Vorrichtung hat zum Deaktivieren einer Gruppe von Leistungsmessungen, wenn eine Netzkomponente hinzugefügt worden ist.

15. Leistungs-Management-Controller nach einem der Ansprüche 9 bis 14, mit einer Vorrichtung zum Speichern von Leistungsmessungen, die in Übereinstimmung mit einer oder mehreren logischen oder physikalischen Komponenten im Netz gruppiert sind.

16. Leistungs-Management-Controller nach einem der Ansprüche 9 bis 15, mit einer Vorrichtung zum Speichern einer Liste von vordefinierten Zeitplänen, wobei jeder Zeitplan einer jeweiligen Leistungsmessungsgruppe entspricht.

17. Leistungs-Management-System, eine Vielzahl von physikalischen und logischen Komponenten umfassend, ein Leistungsmessungs-Tool zum Ausführen von Leistungsmessungen, ein Fehler-Management-Tool zum Berichten über Fehler im Netz, ein Konfigurations-Management-Tool zum Konfigurieren des Netzes und Bereitstellen von Konfigurationsberichten auf in dem Netz auftretende Änderungen hin, wobei das Leistungs-Management-System außerdem einen Leistungs-Management-Controller umfasst, wie er in einem der Ansprüche 9 bis 16 beansprucht ist.

## Revendications

1. Procédé permettant de contrôler automatiquement quelles mesures de rendement sont réalisées dans un réseau (7) dans lequel une pluralité de différentes mesures de rendement sont réalisées, le procédé comprenant les étapes qui consistent à :
recevoir une information se rapportant à des modifications dans la configuration du réseau (7) ;
**caractérisé par** les étapes consistant à :
déterminer si les modifications dans la configuration du réseau (7) ont un impact sur l'une quelconque des mesures de rendement en cours de réalisation dans le réseau, et s'il en est ainsi, à
changer automatiquement les mesures de rendement qui sont réalisées en :
déterminant quelle composante logique ou physique du réseau est affectée par la modification dans la configuration du réseau ;
déterminant quel groupe de mesures de rendement se rapporte à la composante de réseau concernée ;
déterminant un programme temporel pour le groupe de mesures de rendement ; et en
activant ou désactivant le groupe de mesures de rendement en conséquence.

2. Procédé selon la revendication 1, dans lequel la modification dans la configuration du réseau est due à un défaut dans le réseau.

3. Procédé selon la revendication 1 ou 2, dans lequel la modification dans la configuration du réseau est due à une mise à jour du réseau.

4. Procédé selon l'une quelconque des revendications précédentes, dans lequel la modification dans la configuration du réseau est due au ré-adressage d'une composante du réseau.

5. Procédé selon l'une quelconque des revendications précédentes, dans lequel la suppression d'une composante de réseau conduit à la désactivation d'un groupe de mesures de rendement.

6. Procédé selon l'une quelconque des revendications précédentes, dans lequel l'ajout d'une composante de réseau conduit à l'activation d'un groupe de mesures de rendement.

7. Procédé selon l'une quelconque des revendications précédentes, dans lequel les mesures de rendement sont groupées selon une ou plusieurs composantes logiques ou physiques dans le réseau.

8. Procédé selon l'une quelconque des revendications précédentes, dans lequel chaque groupe de mesures de rendement a un programme temporel prédéfini.

9. Contrôleur de gestion du rendement (17) permettant de contrôler automatiquement quelles mesures de rendement sont réalisées dans un réseau (7) dans lequel une pluralité de mesures de rendement sont réalisées, le contrôleur de gestion du rendement comprenant :
un moyen pour recevoir une information se rapportant à des modifications dans la configuration du réseau (7) ; **caractérisé par** :
un moyen (25) pour déterminer si les modifications dans la configuration du réseau (7) ont un impact sur l'une quelconque des mesures de rendement en cours de réalisation dans le réseau ; et
un moyen (25, 3) pour changer automatiquement les mesures de rendement qui sont réalisées si les modifications dans la configuration du réseau ont un impact sur les mesures de rendement, ledit moyen pour modifier les mesures de rendement comprenant :
un moyen pour déterminer quelle composante logique ou physique du réseau est affectée par la modification dans la configuration du réseau ;
un moyen pour déterminer quel groupe de mesures de rendement se rapporte à la composante de réseau concernée ;
un moyen pour déterminer un programme temporel pour le groupe de mesures de rendement ; et
un moyen pour activer ou désactiver le groupe de mesures de rendement en conséquence.

10. Contrôleur de gestion du rendement selon la revendication 9, dans lequel la modification dans la configuration du réseau est due à un défaut dans le réseau.

11. Contrôleur de gestion du rendement selon la revendication 9 ou 10, dans lequel la modification dans la configuration du réseau est due à une mise à jour du réseau.

12. Contrôleur de gestion du rendement selon l'une quelconque des revendications 9 à 11, dans lequel la modification dans la configuration du réseau est due au ré-adressage d'une composante du réseau.

13. Contrôleur de gestion du rendement selon l'une quelconque des revendications 9 à 12, dans lequel le moyen pour modifier les mesures de rendement a un moyen pour désactiver un groupe de mesures de rendement lorsqu'une composante de réseau est supprimée.

14. Contrôleur de gestion du rendement selon l'une quelconque des revendications 9 à 13, dans lequel le moyen pour modifier les mesures de rendement a un moyen pour activer un groupe de mesures de rendement lorsqu'une composante de réseau est ajoutée.

15. Contrôleur de gestion du rendement selon l'une quelconque des revendications 9 à 14, ayant un moyen pour stocker des mesures de rendement qui sont groupées selon une ou plusieurs composantes logiques ou physiques dans le réseau .

16. Contrôleur de gestion du rendement selon l'une quelconque des revendications 9 à 15, ayant un moyen pour stocker une liste de programmes prédéfinis temporels, chaque programme temporel correspondant à un groupe de mesures de rendement respectif.

17. Système de gestion du rendement comprenant une pluralité de composantes physiques ou logiques, un outil de mesure du rendement servant à réaliser des mesures de rendement, un outil de gestion des défauts servant à signaler des défauts dans le réseau, un outil de gestion de la configuration servant à configurer le réseau et à délivrer des rapports de configuration en cas de modifications apparaissant dans le réseau, le système de gestion du rendement comprenant en outre un contrôleur de gestion du rendement selon l'une quelconque des revendications 9 à 16.
